(19) Europäisches Patentamt
European Patent Office
Office européen des brevets

(11) Numéro de publication: **0 231 680 B1**

(12) **FASCICULE DE BREVET EUROPEEN**

(45) Date de publication du fascicule du brevet: **13.12.89**

(51) Int. Cl.⁴: **C04B 26/06**

(21) Numéro de dépôt: **86402680.2**

(22) Date de dépôt: **03.12.86**

# (54) Utilisation d'une composition à base de liant organique en ou sur milieu humide et procédé de préparation du mortier.

(30) Priorité: **12.12.85 FR 8518421**

(43) Date de publication de la demande: **12.08.87 Bulletin 87/33**

(45) Mention de la délivrance du brevet: **13.12.89 Bulletin 89/50**

(84) Etats contractants désignés: **AT BE CH DE ES GB GR IT LI LU NL SE**

(56) Documents cités:
**EP-A- 0 118 009**
**GB-A- 2 055 385**
**GB-A- 2 097 806**
**US-A- 4 212 790**

(73) Titulaire: **NORSOLOR S.A., Tour Aurore Place des Reflets, F-92080 Paris la Défense Cédex 5(FR)**

(72) Inventeur: **Barbier, Yves, 911 rue Basse, F-60700 Pont Point(FR)**
Inventeur: **Perrin, Christian, 4 rue de l'Aviation, F-78500 Sartrouville(FR)**
Inventeur: **Lapairy, Jean-Claude, 114 Route de Pontoise, F-60000 Beauvais(FR)**

(74) Mandataire: **Rieux, Michel, c/o NORSOLOR Service Propriété Industrielle B.P. 57, F-62670 Mazingarbe(FR)**

EP 0 231 680 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet l'utilisation d'une composition de liant organique en ou sur milieu humide, ou les deux à la fois, notamment comme liant pour agglomérer des charges humides, ou encore servir de liant intermédiaire entre une surface humide et un béton.

Le document US-A 4 212 790 divulgue l'utilisation d'un monomère (meth)acrylique hydroxylé et d'un système catalytique peroxyde-amine entrant dans la composition d'une résine pour béton.

Souvent les résines organiques utilisées comme liant dans les mortiers nécessitent, à des degrés divers, l'emploi de charges sèches ou très sèches, obligeant la plupart du temps à des séchages en étuve ainsi que des stockages en atmosphère exempte d'humidité.

En effet, en présence d'eau, la polymérisation de ces résines organiques s'effectue dans de mauvaises conditions, soit partiellement, soit pas du tout.

Par exemple, les résines méthacryliques ou acryliques acceptent une faible présence d'eau n'excédant pas 2% en poids. Au-delà de cette proportion, la polymérisation s'opère plus lentement, pour donner un béton friable.

Par ailleurs, l'adhérence d'un mortier comportant une résine organique liante est généralement convenable sur une surface sèche, mais elle est faible voire nulle sur une surface humide.

La présente invention a pour but de résoudre les inconvénients cités ci-dessus, et donc de permettre la préparation de mortier avec des charges humides ainsi que l'adhérence des mortiers sur des surfaces humides.

Plus précisément, l'invention a pour premier objet l'utilisation d'une composition de liant à base de résine organique. Le liant est destiné à servir en combinaison avec des charges humides à la préparation de mortier utilisable en ou sur milieu humide, ou les deux à la fois, ledit liant étant composé d'une part d'un ou de plusieurs monomères organiques et d'autre part d'au moins un système de catalyse de ce(s) monomère(s). Ledit liant comprend au moins un monomère (méth)acrylique hydroxylé dans la proportion de 0,5 à 99 % en poids.

On entend par monomères (méth)acryliques hydroxylés, les monomères acryliques hydroxylés et les monomères méthacryliques hydroxylés. Ce sont notamment les monomères de formule générale :

$H_2C = C(R_1) - C(O) - O - R_2$ (I)

dans laquelle :

- $R_1$ est un atome d'hydrogène ou un radical méthyle,
- $R_2$ est un groupe alkyle, linéaire ou ramifié, de 2 à 20 atomes de carbone comportant au moins une fonction hydroxyle; et éventuellement une ou plusieurs fonctions éthers et/ou une ou plusieurs fonctions cétones et/ou une ou plusieurs fonctions amines, et/ou un ou plusieurs atomes choisi dans le groupe VII B des halogènes.

Parmi les monomères (méth)acryliques hydroxylés utilisables dans le liant selon l'invention on peut citer notamment l'acrylate de 2-hydroxyéthyle, l'acrylate de 2-hydroxypropyle, l'acrylate de 3-hydroxypropyle, l'acrylate de dihydroxy-1,2-propyle, l'acrylate de 2-hydroxybutyle, l'acrylate de 3-hydroxybutyle, l'acrylate de 4-hydroxybutyle, l'acrylate de 2-hydroxyoctyle, l'acrylate de 2-hydroxydodecyle, l'acrylate de 2-hydroxy-3-chloropropyle, la N-méthylolacrylamide,ainsi que les méthacrylates correspondants aux acrylates énumérés ci-avant. On peut citer également les monomères méthacryliques hydroxylés vendus sous la marque commerciale PLACELL, obtenus par réaction d'une ou plusieurs molécules de caprolactone avec des monomères hydroxylés.

Conformément à l'invention, on peut introduire un mélange de deux ou plusieurs monomères (méth)acryliques hydroxylés dans le liant.

Les monomères (méth)acryliques hydroxylés concernés par la présente invention sont solubles dans l'eau. Par contre, à l'état de polymères, ils n'absorbent plus qu'une très faible quantité d'eau. On a donc eu l'idée d'utiliser ces monomères comme adjuvant, ou même comme constituant principal du liant de manière à ce que l'eau, contenue dans les charges ou présente sur une surface quelconque, soit diluée par ces monomères et ensuite expulsée vers l'extérieur du mortier pendant la phase exothermique de la polymérisation.

La quantité minimale de monomères (méth)acryliques hydroxylés, à introduire lors de la préparation du liant selon l'invention, est, bien entendu, fonction du pourcentage en poids d'eau que ledit monomère est capable de diluer.

Par exemple, dans le cas du méthacrylate de 2-hydroxyéthyle, on a établi expérimentalement une courbe (se reporter à la figure 1) qui permet de connaitre le pourcentage x minimal en poids de méthacrylate de 2-hydroxyéthyle à introduire dans le liant en fonction du pourcentage en poids y d'eau évalué par rapport à la résine méthacrylique liante, sachant que le béton est constitué de charges minérales qui sont liées par 10 % en poids de résine méthacrylique liante. D'après cette courbe, on estime que pour 2,5g d'eau contenue dans une charge ou présente sur une surface, on doit utiliser au moins 1g de méthacrylate de 2-hydroxyéthyle.

Parmi les monomères organiques pouvant être présents dans le liant selon l'invention, on peut citer les esters, les époxydes, les uréthanes, les dérivés (méth)acryliques comme les esters (méth)acryliques, par exemple le méthacrylate de méthyle, ou les acides méthacryliques, les amides, par exemple les (méth)acrylamides,les carbonates, etc.

Parmi les systèmes catalytiques utilisables dans la polymérisation du liant selon l'invention, on préfère utiliser les systèmes de catalyse peroxyde-amine, à raison de 0,3 à 5% en poids du liant, le peroxyde étant par exemple le peroxyde de benzoyle, le percarbonate, et l'amine étant par exemple la diméthylaniline, ou encore une amine tertiaire aromatique. Toutefois, quand la teneur en eau excède 15 % en poids de la charge, on utilise des systèmes catalytiques solubles dans l'eau, par exemple des systèmes persulfates/persulfites-ou eau oxygénée/sels de Mohr, ou encore des systèmes catalytiques peroxyde-amine comme les systèmes peroxyde de benzoyle-diethanolparatoluidine et ses homologues.

Un second objet de la présente invention consiste en un procédé de préparation de mortier à partir de charges et d'au moins un liant organique, caractérisé par le mélange de charges humides et d'au moins un liant tel que précédemment décrit. Le procédé selon l'invention convient à l'agglomération des charges minérales, par exemple la silice, le verre, le carbonate, ou des fibres, ou encore des charges organiques, végétales ou autre, dans la mesure où elles ne jouent pas le rôle d'inhibiteur de polymérisation. Ces charges peuvent contenir jusqu'à 20% en poids d'eau.

L'utilisation selon l'invention convient également à l'obturation de fissures dans un béton, par exemple dans les monuments historiques. Le liant peut être, dans ce cas, injecté sous pression.

Les exemples donnés ci-dessous à titre indicatif permettront de mieux comprendre l'invention.

**EXEMPLE 1**

Pour 900g d'un sable de rivière, prélevé directement d'une carrière dans l'eau, qui s'équilibre de lui-même vers 5 % d'eau en poids, on prépare le liant de formule :

| | |
|---|---|
| méthacrylate de méthyle | 90 parties |
| polyméthacrylate de méthyle | 10 parties |
| diméthylparatoluidine | 1 partie |
| méthacrylate d'hydroxyéthyle | 20 parties |

Dès que le liant est parfaitement homogène, on l'introduit dans le sable de rivière à raison de 10 % en poids, par rapport au sable. Ensuite, on ajoute le peroxyde de benzoyle, à raison de 1 partie pour 121 parties de liant, afin de déclencher la polymérisation du liant. Au bout d'une heure, le liant est totalement polymérisé. Le béton ainsi obtenu présente d'excellentes qualités mécaniques, notamment de tenue aux chocs.

**EXEMPLE 2**

Pour une charge minérale constituée (en parties en poids) de :

| | |
|---|---|
| silice | 80 |
| carbonate | 20 |
| eau | 8 |

on prépare un liant à partir de (en parties en poids) :

| | |
|---|---|
| méthacrylate de méthyle | 75 |
| méthacrylate de 3-hydroxypropyle | 25 |
| diméthylparatoluidine | 1 |

et 3 parties en poids d'un agent fluidifiant qui est constitué de 50% en poids d'éthanol et de 50% en poids d'un copolymére 20/80 d'acide acrylique et d'acrylate d'éthyle, possédant un poids moléculaire moyen en poids de 15000 et préparé conformément au procédé décrit dans la demande de brevet français N° 85.17327.

Après homogénéisation du liant, on ajoute 11 parties de ce liant dans la charge minérale et on mélange le tout. Ensuite on ajoute du peroxyde de benzoyle à raison de 1 partie de peroxyde de benzoyle pour 101 parties de liant afin de déclencher la polymérisation du liant. Au bout d'une heure, le liant est totalement polymérisé. Le béton ainsi obtenu présente d'excellentes qualités mécaniques, notamment de tenue aux chocs.

**EXEMPLE 3**

Cet exemple est en tout point identique à l'exemple 2, hormis la nature chimique du monomère hydroxylé qui est dans cet exemple de l'acrylate de 2-hydroxyéthyle. Finalement, après polymérisation du liant mélangé à la charge, on obtient un béton possédant d'excellentes qualités mécaniques.

**EXEMPLE 4**

Cet exemple est en tout point identique à l'exemple 2, hormis la nature chimique du monomère hydroxylé qui est dans cet exemple de l'acrylate de 3-hydroxypropyle. Finalement, après polymérisation du liant mélangé à la charge, on obtient un béton possédant d'excellentes qualités mécaniques.

**Revendications**

1. Application d'une composition comprenant d'une part, un ou plusieurs monomères organiques dont au moins un monomère (méth)acrylique hydroxylé dans la proportion de 0,5 à 99% en poids, et d'autre part au moins un système de catalyse de polymérisation, comme liant destiné à servir en combinaison avec des charges humides, à la préparation de mortier utilisable en et/ou sur milieu humide.

2. Application selon la revendication 1, caractérisée en ce que le monomère (méth)acrylique hydroxylé a pour formule générale:

$H_2C = C(R_1)–C(O)–O–R_2$ (I)

dans laquelle:

– $R_1$ est un atome d'hydrogène ou un radical méthyle,

– $R_2$ est un groupe alkyle, linéaire ou ramifié, de 2 à 20 atomes de carbone comportant au moins une fonction hydroxyle; et éventuellement une ou plusieurs fonctions éthers et/ou une ou plusieurs fonctions cétones et/ou une ou plusieurs fonctions amines, et/ou un ou plusieurs atomes choisi dans le groupe VII B des halogènes.

3. Application selon la revendication 2, caractérisée en ce que le monomère (méth)acrylique hydroxylé est choisi parmi l'acrylate de 2-hydroxyéthyle, ou l'acrylate de 3-hydroxypropyle, ou l'acrylate de dihydroxy-1,2-propyle, ou encore les méthacrylates correspondants auxdits acrylates.

4. Application selon l'une des revendications 1, 2 ou 3, caractérisée en ce que le système de catalyse

est un système peroxyde-amine.

5. Application selon l'une des revendications 1 à 4, caractérisée en ce que ledit liant comprend en outre au moins un monomère choisi parmi les esters, les époxydes, les carbonates, les amides, les uréthanes, les dérivés acryliques ou méthacryliques.

6. Application selon l'une des revendications 1 à 5, caractérisée en ce que le système de catalyse représente de 0,3 à 5% en poids du liant.

7. Procédé de préparation de mortier à partir de charges et d'au moins un liant organique, caractérisé par le mélange de charges humides et d'au moins un liant comprenant d'une part, un ou plusieurs monomères organiques dont au moins un monomère (méth)acrylique hydroxylé dans la proportion de 0,5 à 99% en poids, et d'autre part au moins un système de catalyse de polymérisation.

**Patentansprüche**

1. Anwendung einer Zusammensetzung enthaltend einerseits ein oder mehrere organische Monomer(e), darunter mindestens ein hydroxyliertes (Meth)acrylsäuremonomer in einem Prozentsatz von 0,5 bis 99 Gew.-%, und andererseits mindestens ein Polymerisationskatalysatorsystem, als Bindemittel, das dazu bestimmt ist, in Kombination mit feuchten Füllstoffen zur Herstellung von in und/oder auf feuchtem Milieu verwendbaren Mörtel zu dienen.

2. Anwendung nach Anspruch 1, dadurch gekennzeichnet, daß das hydroxylierte (Meth)acrysäuremonomer die allgemeine Formel $H_2C = C(R_1)-C(O)-O-R_2$ (I) hat, in der

– $R_1$ ein Wasserstoffatom oder ein Methylradikal ist, und

– $R_2$ eine lineare oder verzweigte Alkylgruppe mit 2 bis 20 Kohlenstoffatomen ist, die mindestens eine Hydroxylfunktion enthält, und gegebenenfalls eine oder mehrere Etherfunktionen und/oder eine oder mehrere Ketonfunktionen und/oder eine oder mehrere Aminfunktionen und/oder ein oder mehrere aus der Halogengruppe VII B ausgewählte Atome.

3. Anwendung nach Anspruch 2, dadurch gekennzeichnet, daß das hydroxylierte (Meth)acrylsäuremonomer ausgewählt ist aus der Gruppe bestehend aus dem 2-Hydroxyethylacrylat, dem 3-Hydroxypropylacrylat, dem Dihydroxy-1,2-propylacrylat und auch den den genannten Acrylaten entsprechenden Methacrylaten.

4. Anwendung nach Anspruch 1, 2 oder 3, dadurch gekennzeichnet, daß das Katalysatorsystem ein Peroxid-Amin-System ist.

5. Anwendung nach einem der Ansprüche 1 bis 4, dadurch gekennzeichnet, daß das genannte Bindemittel weiters mindestens ein Monomer enthält, das augewählt ist aus der Gruppe bestehend aus den Estern, den Epoxiden, den Carbonaten, den Amiden, den Urethanen und den Acryl- oder Methacrylsäurederivaten.

6. Anwendung nach einem der Ansprüche 1 bis 5, dadurch gekennzeichnet, daß das Katalysatorsystem 0,3 bis 5 Gew.-% des Bindemittels ausmacht.

7. Verfahren zur Herstellung von Mörtel aus Füllstoffen umd mindestens einem organischen Bindemittel, gekennzeichnet durch das Mischen feuchter Füllstoffe und mindestens eines Bindemittels, das einerseits ein oder mehrere organische Monomere, darunter mindestens ein hydroxyliertes (Meth)acrylsäuremonomer in einem Prozentsatz von 0,5 bis 99 Gew.-%, und andererseits mindestens ein Polymerisationskatalysatorsystem enthält.

**Claims**

1. Application of a composition comprising, on the one hand one or more organic monomers including at least one hydroxylated (meth)acrylic monomer in the proportion of 0.5 to 99% by weight, and on the other hand at least one polymerization catalysis system, as a binder intended for use in combination with wet fillers, for preparing mortar which can be used in and/or on a wet medium.

2. Application according to Claim 1, characterized in that the hydroxylated (meth)acrylic monomer has the general formula:

$H_2C = C(R_1)-C(O)-O-R_2$ (I)

in which:

$R_1$ is a hydrogen atom or a methyl radical,

$R_2$ is a linear or branched alkyl group comprising 2 to 20 carbon atoms and containing at least one hydroxyl group; and optionally one or more ether groups and/or one or more ketone groups and/or one or more amine groups and/or one or more atoms chosen from the halogen group VII B.

3. Application according to Claim 2, characterized in that the hydroxylated (meth)acrylic monomer is chosen from 2-hydroxyethyl acrylate or 3-hydroxypropyl acrylate or 1,2-dihydroxypropyl acrylate, or alternatively the methacrylates corresponding to the said acrylates.

4. Application according to one of Claims 1, 2 or 3, characterized in that the catalysis system is a peroxide/amine system.

5. Application according to one of Claims 1 to 4, characterized in that the said binder comprises, in addition, at least one monomer chosen from esters, epoxides, carbonates, amides, urethanes and acrylic or methacrylic derivatives.

6. Application according to one of Claims 1 to 5, characterized in that the catalysis system represents from 0.3 to 5% by weight of the binder.

7. Process for preparing mortar using fillers and at least one organic binder, characterized by the mixing of wet fillers with at least one binder comprising, on the one hand one or more organic monomers including at least one hydroxylated (meth)acrylic monomer in the proportion of 0.5 to 99% by weight, and on the other hand at least one polymerization catalysis system.

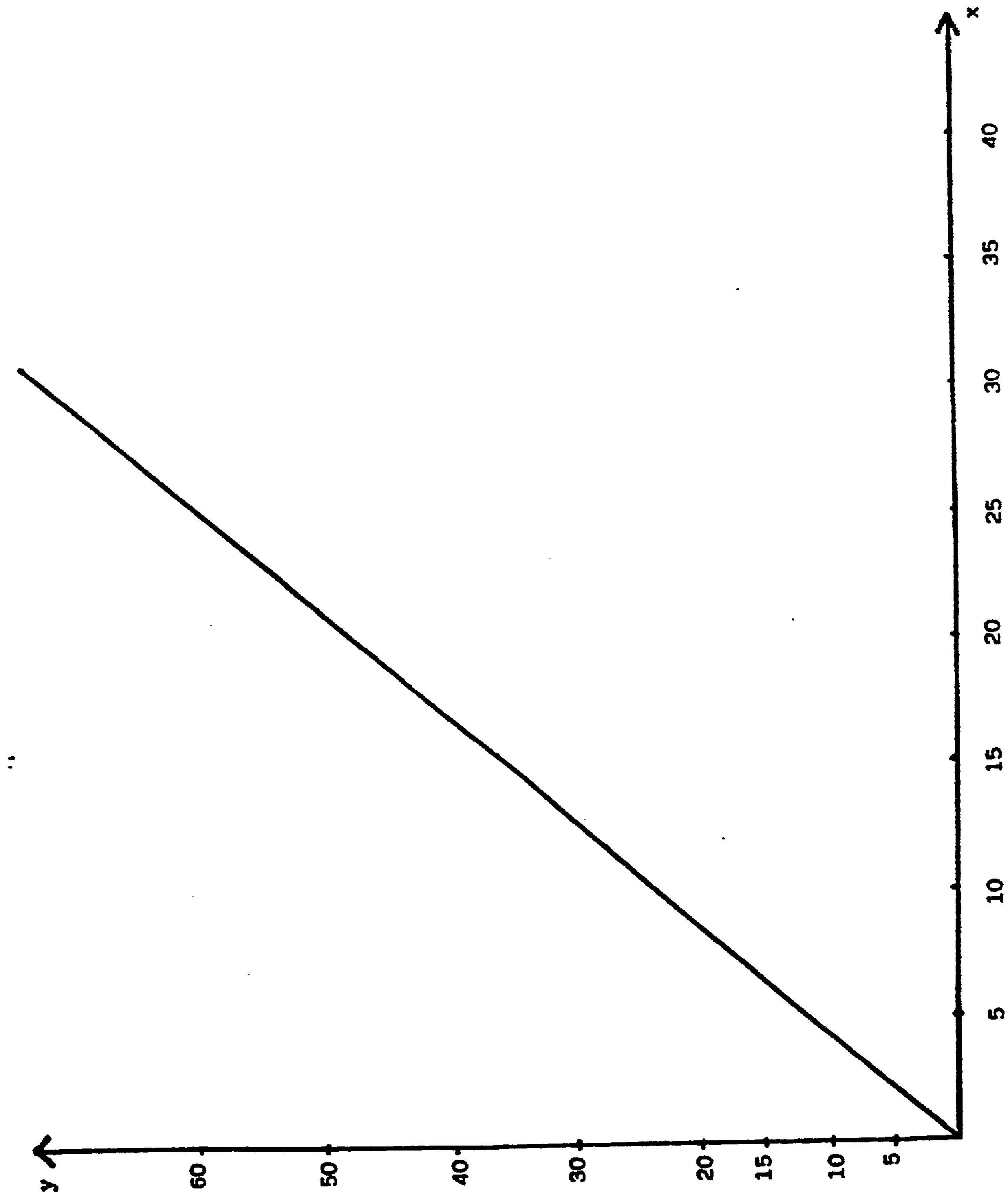


Figure 1 -